# EUROPÄISCHE PATENTANMELDUNG

(11) **EP 2 184 546 A1**
(43) Veröffentlichungstag der Anmeldung: **12.05.2010**
(21) Anmeldenummer: 08291037.3
(22) Anmeldetag: 06.11.2008
(51) Int. Cl.: F24C 15/32, A21B 1/26

(54) **Gargerät und Verfahren zum Variieren einer zirkulierenden Strömung in einem Garraum eines solchen Gargeräts**

(71) Anmelder: Topinox Sarl, 68270 Wittenheim (FR)
(72) Erfinder:
(74) Vertreter: Weber-Bruls, Dorothée

(57) **Zusammenfassung**

Die Erfindung betrifft ein
Gargerät (1;24), umfassend: einen Garraum (3;26) zum Aufnehmen von Gargut; zumindest eine Gebläseeinrichtung, wobei die Gebläseeinrichtung ein mit einer Vielzahl von Schaufeln (15;39;39') versehenes Laufrad (9;32;32') umfasst, und zumindest ein erstes Strömungsleitglied (4;27,37) zum Führen von einem von der Gebläseeinrichtung geförderten Medium, zwecks Umwälzung der Garraumatmosphäre, wobei zumindest eine der Schaufeln (15;39;39') um zumindest eine jeweilige, bezogen auf die Schaufel (15;39;39') feste Achse (17;41;41') bewegbar oder drehbar ist; sowie ein Verfahren zum Variieren einer zirkulierenden Stömung in solch einem Gargerät.

## Beschreibung

Die Erfindung betrifft ein Gargerät, umfassend: einen Garraum zum Aufnehmen von Gargut; zumindest eine Gebläseeinrichtung, wobei die Gebläseeinrichtung ein erstes mit einer Vielzahl von Schaufeln versehenes Laufrad umfasst, und zumindest ein Strömungsleitglied zum Führen von einem von der Gebläseeinrichtung geförderten Medium, zwecks Umwälzung der Garraumatmosphäre, sowie ein Verfahren zum Variieren einer zirkulierenden Strömung insbesondere, in solch einem Gargerät.
Ein gattungsgemäßes Gargerät ist aus der US 3,861,378 bekannt. Das bekannte Gargerät umfasst ein Gebläse, das Luft im Gargerät entlang einer Bahn, die aufwärts durch das Gebläse, an einer Heizungsspiral vorbei, abwärts durch einen Kanal und dann durch Öffnungen in einem seitlich des Garraums angeordneten ersten Diffusorglied verläuft, umwälzt. Die Luft gelangt durch Öffnungen in einem zweiten, auf der dem ersten Diffusorglied gegenüberliegenden Seite des Garraums angeordneten Diffusorglied und über einen weiteren Kanal wieder zurück zum Ansaugbereich des Gebläses. Klappen in den beiden Kanälen sind gleichzeitig in neue Stellungen versetzbar, um die Strömung umkehren zu lassen.

Ein Nachteil des bekannten Aufbaus ist darin zu sehen, dass durch die Anordnung der Klappen zusätzliche Räume entstehen, in Form von Sacklöchern, die die Fördereffizienz beeinträchtigen. Zudem sind nebst einer zentralen Ansaugöffnung im oberen Bereich des Garraums noch zwei seitliche Kanäle erforderlich, die ebenso wie die von den Klappen definierten Räume die Baugröße des Gargeräts unnötig steigern.

Der Erfindung liegt die Aufgabe zugrunde, das gattungsgemäße Gargerät derart weiterzuentwickeln, dass die Nachteile des Stands der Technik zumindest teilweise überwunden werden.

Insbesondere soll es ermöglicht werden, eine Strömung schnell mittels einer kompakten Bauweise zu variieren.

Die das Gargerät betreffende Aufgabe wird erfindungsgemäß dadurch gelöst, dass zumindest eine der Schaufeln um zumindest eine jeweilige, bezogen auf die Schaufel feste Achse bewegbar oder drehbar ist.

Dabei kann vorgesehen sein, dass das Laufrad ein Radiallüfterrad darstellt, oder das Laufrad ein Axiallüfterrad darstellt.

Ferner wird vorgeschlagen, dass die Förderrichtung der Gebläseeinrichtung durch Drehung der Schaufeln reversibel ist, und zwar im Falle eines Axiallüfterrads.

Mit der Erfindung wird zudem vorgeschlagen, dass das Laufrad drehbar auf einer Welle montiert ist, und die zumindest eine Schaufel bei im Wesentlichen konstanter Drehgeschwindigkeit des Laufrads um ihre jeweilige Achse drehbar ist, wobei vorzugsweise die Achse der Schaufel des Radiallüfterrads parallel zur Achse der Antriebswelle des Radiallüfterrads oder die Achse der Schaufel des Axiallüfterrads senkrecht zur Achse der Antriebswelle des Axiallüfterrads verläuft.

Weiterhin wird vorgeschlagen, dass die Schaufel eine Krümmung aufweist, vorzugsweise durch zumindest einen parabelförmigen oder kreisabschnittsförmigen Querschnitt senkrecht zur jeweils festen Achse.

Zudem kann eine von einem Antrieb des Laufrads unabhängigen Betätigungseinrichtung zum Verdrehen der zumindest einen Schaufel um die jeweilige feste Achse vorgesehen sein.

Bevorzugte erfindungsgemäße Ausführungsformen können gekennzeichnet sein durch zumindest eine Steuer- oder Regeleinrichtung zum, insbesondere wiederholbaren und/oder periodischen, Verdrehen oder Bewegen der zumindest einen Schaufel um die jeweilige feste Achse und/oder zum Einstellen eines Drehwinkels der zumindest einen Schaufel um die jeweilige feste Achse, vorzugsweise in Abhängigkeit von zumindest einem Ausgabesignal zumindest einer Sensoreinrichtung und/oder einem im Gargerät ablaufenden Arbeitsprogramm, insbesondere Garprogramm, und/oder zumindest einer weiteren Einrichtung zur Behandlung von Gargut, insbesondere ausgewählt aus einer Heizeinrichtung, einer Wärmetauscheinrichtung und einer Feuchtigkeitszufuhreinrichtung, wie in Form eines Dampfgenerators, eines Zerstäubers und/oder eines Beschwaders.

Bevorzugt sind auch Ausführungsformen, die gekennzeichnet sind durch zumindest ein zweites Strömungsleitglied, das einen Innenraum des Gargeräts in den Garraum und zumindest einen weiteren Raum, insbesondere Gebläseraum, in dem das Laufrad angeordnet ist, aufteilt, wobei das zweite Strömungsleitglied zumindest an zumindest einem Rand eine luftdurchlässige Öffnung freilässt und zumindest eine mittige Öffnung aufweist.

Dabei kann vorgesehen sein, dass in einem von dem zweiten Strömungsleitglied definierten Strömungspfad zumindest ein Teil der Heizeinrichtung, zumindest ein Heizungselement derselben, angeordnet ist.

Zudem kann vorgesehen sein, dass das zweite Strömungsleitglied zumindest teilweise von dem ersten Strömungsleitglied umfasst ist.

Ferner wird vorgeschlagen, dass die Heizeinrichtung eine Mikrowellenheizung mit Mitteln zum Einspeisen von Mikrowellen in den Gebläseraum aufweist, wobei vorzugsweise zumindest eine der drehbaren Schaufeln aus einem zumindest teilweise Mikrowellen reflektierenden Material hergestellt oder mit demselben beschichtet ist

Zudem schlägt die Erfindung ein Variieren der Strömung durch Bewegung oder Drehung zumindest einer der Schaufeln um zumindest eine jeweilige, bezogen auf die Schaufel feste Achse vor.

Der Erfindung liegt die überraschende Erkenntnis zugrunde, dass es möglich ist, die Umwälzung einer Garraumatmosphäre durch Drehung der Schaufeln des Laufrads eines Gebläses zu variieren. Dies ermöglicht im Vergleich zu einer Variierung über die Drehzahl des Laufrads eine schnellere Anpassung, weil das Laufrad eine gewisse Trägheit hat. Im Vergleich zu einer Variierung durch Umlenkung der Strömung mittels Drosseln, Klappen und dergleichen ist die erfindungsgemäße Anordnung kompakter gestaltbar. Durch Drehung der Schaufeln ist es im Prinzip auch möglich, den für die aktuelle Drehzahl des Laufrads optimalen Anstellwinkel der Schaufeln einzustellen.

Wenn das Laufrad eine radiale Bauart aufweist, wird ein besonders kompaktes Gebläse bereitgestellt. Die Umlenkung der Strömung zur Erzeugung einer zirkulierenden Strömung kommt mittels des Laufrads selbst zustande. Im Falle eines Axialgebläses ist für solch eine Umlenkung ein Strömungsleitglied vorzusehen.

Wenn die Förderrichtung der Gebläseeinrichtung durch Drehung der Schaufeln reversibel ist, kann eine Reversierung der Strömung mit minimaler Responszeit erreicht werden. Das Laufrad kann einfach bei konstanter Drehzahl weiterdrehen. Totzeiten bei der Änderung der Umwälzrichtung der Garraumatmosphäre werden vermieden. Eine Reversierung der Strömung trägt zu einer besseren Vergleichmäßigung der Garraumatmosphäre und somit des Klimas im Garraum bei, was wiederum zu reproduzierbaren Garergebnissen führt.

Das Laufrad der Gebläseeinrichtung ist drehbar auf einer Welle montiert. Wenn die zumindest eine Schaufel bei im Wesentlichen konstanter Drehgeschwindigkeit des Laufrads um die jeweilige feste Achse drehbar ist, kann bei konstanter Drehzahl eine Anpassung der Strömungsgeschwindigkeit vorgenommen werden, und zwar mit minimalen Responszeiten.

In dem Fall, in dem die Schaufeln gekrümmt, sind lassen sich bei Drehung derselben besonders schnell und präzise Einstellungen der Strömung erreichen.

Mit einer von einem Antrieb des Laufrads unabhängigen Betätigungseinrichtung zum Verdrehen der zumindest einen Schaufel um die jeweilige feste Achse ist der Anstellwinkel der Schaufeln besser in Abhängigkeit der aktuellen Anforderungen oder Bedingungen, beispielsweise in Abhängigkeit vom jeweiligem Garprogramm, der Last im Garraum und/oder dem Klima im Garraum anzupassen. Mittels einer Steuer- oder Regeleinrichtung kann trotzdem eine drehzahlabhängige Einstellung erfolgen, aber weitere Faktoren können bei der Bestimmung des Winkels mit einbezogen werden.

Wenn das Gargerät mit einer Steuer- oder Regeleinrichtung zum Einstellen eines Drehwinkels der zumindest einen Schaufel um die jeweilige feste Achse in Abhängigkeit von zumindest einem Sensorsignal versehen ist, können verschiedene, den Ablauf der Garprozesse beeinflussende, Parameter schnell und präzise geregelt werden.

Durch ein wiederholtes, insbesondere periodisches, Verdrehen der zumindest einen Schaufel um die jeweilige feste Achse können aufgrund von Chaotisierungseffekten unvermeidbare Unterversorgungen im Garraum gebrochen werden, was also wieder zu einer gleichmäßigen Wärmeleitung im Gargut im Garraum führt.

Wenn das Gargerät eine weitere Einrichtung zur Behandlung von Gargut und eine Regel- oder Steuereinrichtung aufweist, die eine Drehung der zumindest einen Schaufel während der Ausübung zumindest einer bestimmten Funktion der weiteren Behandlungseinrichtung bewirkt, kann die Strömung funktionsbezogen variiert, insbesondere auch reversiert, werden. So werden Prozesse, die durch die weitere Behandlungseinrichtung bewirkt werden, wie spezielle Garverfahren, optimal durch die Umwälzung der Garraumatmosphäre unterstützt.

Wenn im Gargerät ein Strömungsleitglied, das einen Innenraum des Gargeräts in den Garraum und zumindest einen weiteren Raum unterteilt, wie einem Gebläseraum für das Laufrad vorgesehen ist, wobei das Strömungsleitglied zumindest an zumindest einem Rand eine luftdurchlässige Öffnung freilässt, kann das Gargerät kompakt gestaltet werden. Zudem werden Wärmeverluste verringert.

Wenn in einem von dem zumindest einen Strömungsleitglied definierten Strömungspfad zumindest ein Heizungselement einer Heizeinrichtung angeordnet ist, wird der Garraum gleichmäßiger beheizt. Durch Konvektion kommt eine gleichmäßigere Erwärmung des Garguts zustande. Durch Anordnung des Heizungselements in dem Strömungspfad im Gebläseraum statt im Garraum wird vermieden, dass nah am Heizungselement angeordnetes Gargut überhitzt wird oder gar anbrennt.

Wenn das Gargerät mit einer Mikrowellenheizung mit Mitteln zum Einspeisen von Mikrowellen insbesondere in den Gebläseraum, versehen ist, sei es zusätzlich oder alternativ zu dem Heizelement, und zumindest eine der drehbaren Schaufeln aus einem zumindest teilweise Mikrowellen reflektierendem Material hergestellt ist, kann das Laufrad mit der bzw. den drehbaren Schaufel(n) zusätzlich als Modenmischer eingesetzt werden. Durch Änderungen der Schaufelstellung kann dabei die chaotische Verteilung der Mikrowellenenergie verstärkt werden, um so im kompletten Garraum eine gleiche Mikrowellenbeaufschlagung von Gargut gewährleisten zu können.

Dieser Effekt der Vergleichmäßigung der Bedingungen im Garraum wird noch stärker, wenn die Schaufel(n) eine unregelmäßige Bewegung ausführen kann bzw. können.

Weitere Merkmale und Vorteile der Erfindung ergeben sich aus der nachfolgenden Beschreibung, in der ein Ausführungsbeispiel der Erfindung anhand schematischer Zeichnungen im Einzelnen erläutert wird. Dabei zeigt
- Figur 1: eine Seitenschnittansicht einer ersten Ausführungsform eines erfindungsgemäßen Gargeräts;
- Figur 2: eine Seitenschnittansicht einer zweiten Ausführungsform eines erfindungsgemäßen Gargeräts; und.
- Figur 3: eine perspektivische Ansicht eines Axiallüfterrades für ein erfindungsgemäßes Gargerät nach Figur 2.

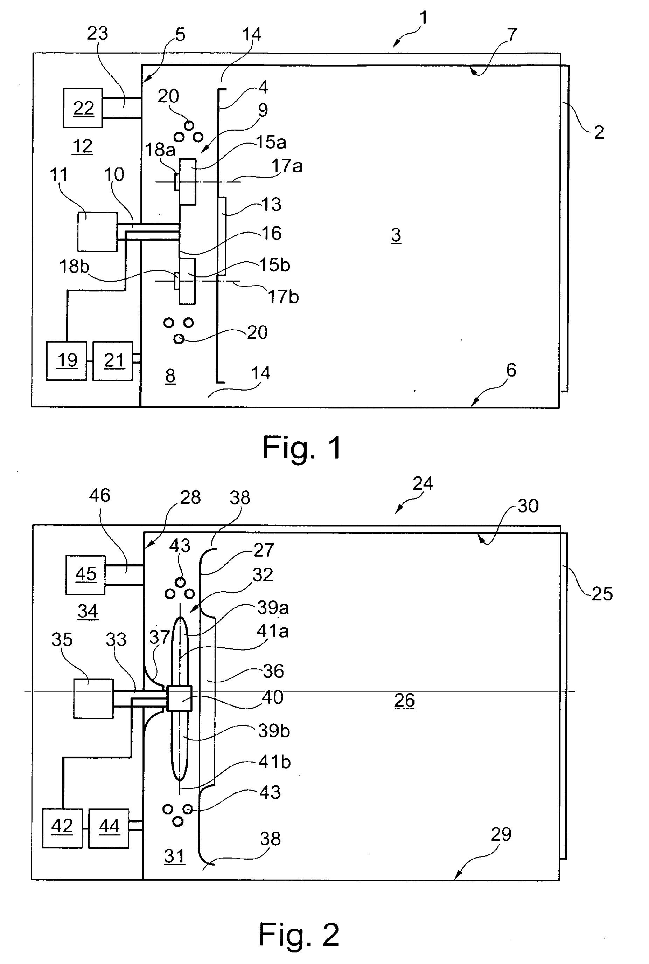

Das in der Figur 1 dargestellte Gargerät 1 umfasst einen durch eine Garraumtür 2 verschließbaren Garraum 3. Ein Strömungsleitglied 4 unterteilt einen von der Garraumtür 2, einer Rückwand 5, einer Bodenfläche 6, einer Decke 7 und nicht näher dargestellten Seitenwänden definierten Innenraum des Gargeräts 1 in den Garraum 3 und einen Gebläseraum 8.

In dem Gebläseraum 8 ist ein Gebläserad 9 drehbar auf einer Antriebswelle 10 angeordnet. Das Gebläserad 9 wird über die Antriebswelle 10 durch eine Antriebseinheit in Form eines Motors 11 angetrieben. Der Motor 11 befindet sich in einem mittels der Rückwand 5 vom Gebläseraum 8 abgetrennten Installationsraum 12.

Die Rotation des Gebläserads 9 führt zu einer Umwälzung der Atmosphäre innerhalb des Garraums 3 und des Gebläseraums 8. Dabei wird die Atmosphäre bzw. das zu fördernde Medium, das Luft, Schwaden, Aromas und dergleichen umfasst, durch eine Öffnung 13 im Strömungsleitglied 4 aus dem Garraum 3 angesaugt und radial abgeblasen. Das Medium gelangt über vom Strömungsleitglied 4 freigelassene Öffnungen 14 wieder in den Garraum 3.

Das Gebläserad 9 umfasst Schaufeln 15a,b, von denen in der Figur 1 nur zwei dargestellt sind. Die Schaufeln 15 sind drehbar auf einer Nabenscheibe 16 befestigt. Sie sind drehbar um jeweilige Achsen 17a,b. Stellmittel 18a,b sind vorgesehen, um den Drehwinkel der Schaufeln 15a,b einzustellen. Die Stellmittel 18a,b können einen elektrisch angetriebenen Stellmotor oder eine Einrichtung mit Elektromagneten umfassen. In beiden Fällen stellen die Stellmittel 18a,b eine Betätigungseinrichtung, die unabhängig von der Position und Drehgeschwindigkeit des Gebläserads 9 betrieben werden kann, dar.

In dem in der Figur 1 dargestellten Gargerät 1 ist ein Steuergerät 19 vorgesehen. Das Steuergerät 19 steht in Wirkverbindung mit einem oder mehreren, nicht dargestellten Sensoren. Es können zum Beispiel im Garraum 3 und/oder im Gebläseraum 8 Temperaturfühler, Feuchtigkeitssensoren, Strömungsgeschwindigkeitssensoren und/oder Lasterkennungssensoren angeordnet sein.

Das in der Figur 1 dargestellte Gargerät 1 umfasst weitere Einrichtungen zum Behandeln von im Garraum 3 anwesendem, nicht gezeigtem Gargut in Form einer Heizeinrichtung mit einem um das Gebläserad 9 angeordneten Heizelement 20, einer Einspritzeinrichtung 21 zum Einspritzen von Dampf und/oder Aromastoffen in das vom Gebläserad 9 geförderte Medium und eine Mikrowellenheizung. Die Mikrowellenheizung umfasst einen Mikrowellengenerator 22, z.B. ein Magnetron, und eine Wellenleiterstruktur 23, um die vom Mikrowellengenerator 22 erzeugten Mikrowellen zu einer, nicht dargestellten, Öffnung in der Rückwand 5 zu führen, wo sie über eine nicht dargestellte Antenne in den Gebläseraum 8 gelangen. Der Gebläseraum 8 und der Garraum 3 bilden gekoppelte Resonatoren. Sie sind über die vom Strömungsleitglied 4 freigelassenen Öffnungen 14 und die zentrale Öffnung 13 miteinander gekoppelt.

Die Schaufeln 15a,b sind zumindest teilweise aus einem Mikrowellen reflektierenden Material gefertigt. Somit fungiert das Gebläserad 9 auch als Modenmischer. Diese Funktion wird verstärkt durch das Drehen der Schaufeln 15a,b während des Betriebs der Mikrowellenheizeinrichtung. So kann das Steuergerät 19 die Schaufeln 15a,b während des Betriebs des Mikrowellengenerators 22 eine unregelmäßige Bewegung ausführen lassen. Beispielsweise kann es sich hierbei um eine wiederholte, nicht-periodische, Drehung zwischen zwei Endstellungen handeln.

In der in der Figur 1 dargestellten Ausführungsform kann die Drehrichtung des Gebläserads 9 geändert werden, wobei die Schaufeln 15a,b in die für die jeweilige Drehrichtung optimale Stellung jeweils versetzt werden. So wird die Strömung nach Änderung der Drehrichtung wieder in die ursprüngliche Richtung geleitet. Bei beiden Strömungsrichtungen wird daher ein höchstmöglicher Wirkungsgrad erreicht.

Ein zweites, in der Figur 2 dargestelltes, Gargerät 24 umfasst ebenfalls einen durch eine Garraumtür 25 verschließbaren Garraum 26. Ein erstes Strömungsleitglied 27 unterteilt wieder einen von der Garraumtür 25, einer Rückwand 28, einer Bodenfläche 29, einer Decke 30 und nicht näher dargestellten Seitenwänden definierten Innenraum des Gargeräts 24 in den Garraum 26 und einen Gebläseraum 31.

In dem Gebläseraum 31 des zweiten Gargeräts 24 ist ein axiales Gebläserad 32 angeordnet. Das Gebläserad 32 wird über eine Antriebswelle 33 durch einen in einem Installationsraum 34 angeordneten Motor 35 angetrieben.

Die Rotation des Gebläserads 32 führt auch in dieser Ausführungsform zu einer Umwälzung der Atmosphäre innerhalb des Garraums 26 und des Gebläseraums 31. Dabei wird das zu fördernde Medium durch eine Öffnung 36 im ersten Strömungsleitglied 27 aus dem Garraum 3 angesaugt und durch ein zweites Strömungsleitglied 37 umgelenkt. Das Medium gelangt danach über vom ersten Strömungsleitglied 27 freigelassene Öffnungen 38 wieder in den Garraum 26.

Das Gebläserad 32 umfasst Schaufeln 39a,b, von denen in der Figur 2 nur zwei dargestellt sind. Die Schaufeln 39 sind drehbar auf einer Nabe 40 befestigt. Sie sind drehbar um senkrecht zur Antriebswelle 33 und zur Profilsehne der jeweiligen Schaufel stehende Achsen 41a,b. Nicht näher dargestellte Stellmittel sind vorgesehen, um den Drehwinkel der Schaufeln 39a,b einzustellen. Die Stellmittel können einen elektrisch angetriebenen Stellmotor, eine Einrichtung mit Elektromagneten oder eine hydraulische Betätigungseinrichtung umfassen. Sie stehen mit einem Steuergerät 42 in Wirkverbindung. Wie oben in Zusammenhang mit dem ersten Gargerät 1 erläutert, steht das Steuergerät 42 auch mit einem oder mehreren, nicht dargestellten Sensoren in Wirkverbindung.

Das in der Figur 2 dargestellte Gargerät 24 umfasst die gleichen weiteren Einrichtungen zum Behandeln von im Garraum 26 anwesendem, nicht gezeigtem Gargut wie das erste Gargerät 1, nämlich ein Heizelement 43 einer Heizeinrichtung, eine Einspritzeinrichtung 44 zum Einspritzen von Dampf und/oder Aromastoffen in das vom Gebläserad 32 geförderte Medium und eine Mikrowellenheizung mit einem Mikrowellengenerator 45 und einer Wellenleiterstruktur 46.

Die Förderrichtung der von dem Motor 35, der Antriebswelle 33 und dem Gebläserad 32 gebildeten Gebläseeinrichtung ist durch Drehung der Schaufeln 39a,b bei drehender Antriebswelle 33 reversibel. Insbesondere kann die Reversierung bei fester Drehzahl des Gebläserads 32 erfolgen.

Die Umkehrung kann wiederholt, zum Beispiel periodisch, erfolgen. Hierdurch wird erreicht, dass die Strömung alle Bereiche des Garraums 26 erreicht. Insbesondere kann die Umkehrung funktionsbezogen erfolgen. Zum Beispiel kann die periodische Umkehrung eingeschaltet werden, wenn die Heizelemente 43 und/oder wenn die Einspritzeinrichtung aktiviert ist bzw. sind. Auch kann bei einer funktionsbezogenen Umkehrung zum Beispiel eine bessere Flüssigkeitsverteilung beim Beschwaden erreicht werden. Die Strömungsumkehrung kann auch in Abhängigkeit von Sensorsignalen erfolgen, zum Beispiel wenn die Differenz zwischen den Messwerten von zwei Sensoren einen bestimmten Schwellenwert überschreitet.

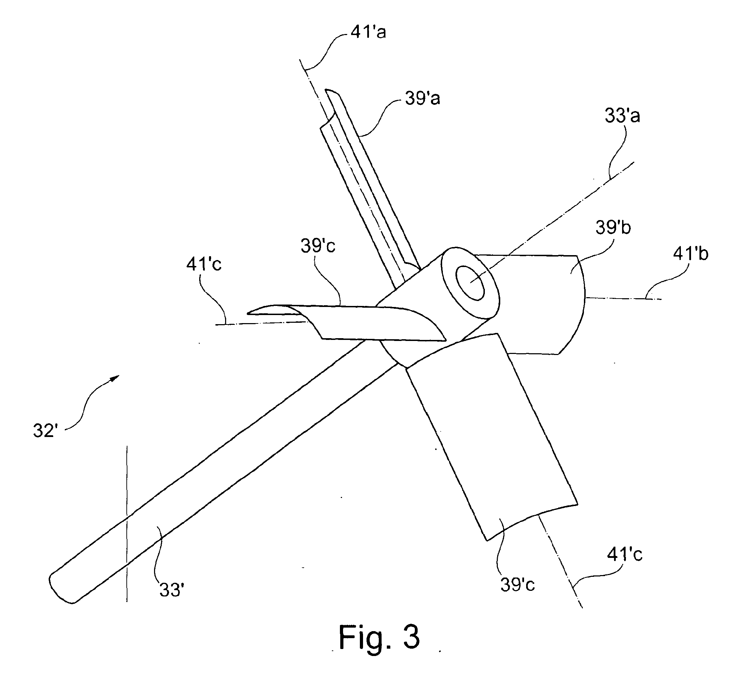

In Figur 3 ist ein Gebläserad 32' dargestellt, bei dem es sich um ein Axiallüfterrad handelt, das alternativ zu dem der Figur 2 verwendet werden kann. Dieses Gebläserad 32' weist vier, sich im Wesentlichen senkrecht zu der Rotationsachse 33'a seiner Antriebswelle 33' ausbreitende Schaufeln 39'a bis 39'c auf. Jede dieser Schaufeln 39'a bis 39'c ist um eine senkrecht auf der Rotationsachse 33'a angeordnete Rotationsachse 41'a bis 41'c drehbar. Zur Verbesserung der Wirksamkeit der Strömungsführung sind die Schaufeln 39'a bis 39'c gekrümmt ausgeformt, und zwar derart, dass sie parabel- oder kreisabschnittsförmig im Querschnitt senkrecht zu ihrer jeweiligen Rotationsachse 41'a bis 41'c geformt sind.

Die in der voranstehenden Beschreibung, den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichenliste

- 1: Gargerät
- 2: Garraumtür
- 3: Garraum
- 4: Strömungsleitglied
- 5: Rückwand
- 6: Bodenfläche
- 7: Decke
- 8: Gebläseraum
- 9: Gebläserad
- 10: Antriebswelle
- 11: Motor
- 12: Installationsraum
- 13: Öffnung
- 14: Öffnungen an den Rändern des Strömungsleitglieds
- 15a,b: Schaufeln
- 16: Nabenscheibe
- 17a,b: Rotationsachse
- 18a,b: Stellmittel
- 19: Steuergerät
- 20: Heizelement
- 21: Einspritzeinrichtung
- 22: Mikrowellengenerator
- 23: Wellenleiterstruktur
- 24: Gargerät
- 25: Garraumtür
- 26: Garraum
- 27: Strömungsleitglied
- 28: Rückwand
- 29: Bodenfläche
- 30: Decke
- 31: Gebläseraum
- 32,32': Gebläserad
- 33, 33': Antriebswelle
- 33'a: Rotationsachse
- 34: Installationsraum
- 35: Motor
- 36: Öffnung
- 37: 2. Strömungsleitglied
- 38: Öffnung am Rand des Strömungsleitglieds
- 39a,b; 39'a - c: Schaufel
- 40: Nabe
- 41a,b; 41'a -c: Rotationsachse
- 42: Steuergerät
- 43: Heizelement
- 44: Einspritzeinrichtung
- 45: Mikrowellengenerator
- 46: Wellenleiterstruktur

## Patentansprüche

1. Gargerät (1;24), umfassend:
einen Garraum (3;26) zum Aufnehmen von Gargut;
zumindest eine Gebläseeinrichtung,
wobei die Gebläseeinrichtung ein mit einer Vielzahl von Schaufeln (15;39;39') versehenes Laufrad (9;32;32') umfasst, und
zumindest ein erstes Strömungsleitglied (4;27,37) zum Führen von einem von der Gebläseeinrichtung geförderten Medium, zwecks Umwälzung der Garraumatmosphäre,
**dadurch gekennzeichnet, dass**
zumindest eine der Schaufeln (15;39;39') um zumindest eine jeweilige, bezogen auf die Schaufel (15;39;39') feste Achse (17;41,41') bewegbar oder drehbar ist.

2. Gargerät nach Anspruch 1, **dadurch gekennzeichnet, dass**
das Laufrad (9) ein Radiallüfterrad darstellt, oder das Laufrad (32;32') ein Axiallüfterrad darstellt.

3. Gargerät nach Anspruch 1 oder 2, **dadurch gekennzeichnet, dass**
die Förderrichtung der Gebläseeinrichtung durch Drehung der Schaufeln (39;39') reversibel ist.

4. Gargerät nach einem der vorangehenden Ansprüche, **dadurch gekennzeichnet, dass**
**das** Laufrad (9;32;32') drehbar auf einer Welle (10;33;33') montiert ist, und
die zumindest eine Schaufel (15;39;39') bei im Wesentlichen konstanter Drehgeschwindigkeit des Laufrads (9;32;32') um ihre jeweilige Achse (17;41;41') drehbar ist, wobei vorzugsweise die Achse (17) der Schaufel (15) des Radiallüfterrads (9) parallel zur Achse der Antriebswelle (10) des Radiallüfterrads (9) oder die Achse (41;41') der Schaufel (39;39') des Axiallüfterrads (32;32') senkrecht zur Achse (33'a) der Antriebswelle (33;33') des Axiallüfterrads (32;32') verläuft.

5. Gargerät nach einem der vorangehenden Ansprüche, **dadurch gekennzeichnet, dass**
die Schaufel (15;39;39') eine Krümmung aufweist, vorzugsweise durch zumindest einen parabelförmigen oder kreisabschnittsförmigen Querschnitt senkrecht zur jeweils festen Achse (41').

6. Gargerät nach einem der vorangehenden Ansprüche, **gekennzeichnet durch**
eine von einem Antrieb des Laufrads (9;32) unabhängigen Betätigungseinrichtung (18) zum Verdrehen der zumindest einen Schaufel (15;39) um die jeweilige feste Achse (17;41).

7. Gargerät nach einem der vorangehenden Ansprüche, **gekennzeichnet durch**
zumindest eine Steuer- oder Regeleinrichtung (19;42) zum, insbesondere wiederholbaren und/oder periodischen, Verdrehen oder Bewegen der zumindest einen Schaufel (15;39;39') um die jeweilige feste Achse (17;41;41') und/oder zum Einstellen eines Drehwinkels der zumindest einen Schaufel (15;39;39') um die jeweilige feste Achse (17;41;41'), vorzugsweise in Abhängigkeit von zumindest einem Ausgabesignal zumindest einer Sensoreinrichtung und/oder einem im Gargerät ablaufenden Arbeitsprogramm, insbesondere Garprogramm, und/oder zumindest einer weiteren Einrichtung (20,21,22,23;43,44,45,46) zur Behandlung von Gargut, insbesondere ausgewählt aus einer Heizeinrichtung, einer Wärmetauscheinrichtung und einer Feuchtigkeitszufuhreinrichtung, wie in Form eines Dampfgenerators, eines Zerstäubers und/oder eines Beschwaders.

8. Gargerät nach einem der vorangehenden Ansprüche, **gekennzeichnet durch**
zumindest ein zweites Strömungsleitglied (4;27), das einen Innenraum des
Gargeräts (1;24) in den Garraum (3;26) und zumindest einen weiteren Raum, insbesondere Gebläseraum (8;31), in dem das Laufrad (9; 32) angeordnet ist, aufteilt, wobei das zweite Strömungsleitglied (4;27) zumindest an zumindest einem Rand eine luftdurchlässige Öffnung (14;38) freilässt und zumindest eine mittige Öffnung (13;36) aufweist.

9. Gargerät nach Anspruch8, **dadurch gekennzeichnet, dass**
in einem von dem zweiten Strömungsleitglied (4;27,37) definierten Strömungspfad zumindest ein Teil der Heizeinrichtung, zumindest ein Heizungselement (20;43) derselben, angeordnet ist.

10. Gargerät nach Anspruch 8 oder 9, **dadurch gekennzeichnet, dass**
das zweite Strömungsleitglied (4;27) zumindest teilweise von dem ersten Strömungsleitglied (4;27;37) umfasst ist.

11. Gargerät nach Anspruch 10, **dadurch gekennzeichnet, dass**
die Heizeinrichtung eine Mikrowellenheizung mit Mitteln (22,23;45,46) zum Einspeisen von Mikrowellen in den Gebläseraum (8;31) aufweist, wobei vorzugsweise zumindest eine der drehbaren Schaufeln (15;39) aus einem zumindest teilweise Mikrowellen reflektierenden Material hergestellt oder mit demselben beschichtet ist.

12. Verfahren zum Variieren einer zirkulierenden Strömung in einem mit einem Garraum versehenen Gargerät, insbesondere einem Gargerät nach einem der vorangehenden
Ansprüche, umfassend:
ein Antreiben eines Laufrads einer Gebläseeinrichtung, die ein mit einer Vielzahl von Schaufeln versehenes Laufrad umfasst, und
ein Führen von einem von der Gebläseeeinrichtung geförderten Medium, so dass eine Umwälzung einer Garraumatmosphäre zustande kommt, **gekennzeichnet durch**
ein Variieren der Strömung **durch** Bewegung oder Drehung zumindest einer der Schaufeln um zumindest eine jeweilige, bezogen auf die Schaufel feste Achse.
